**Europäisches Patentamt**

**European Patent Office**

**Office européen des brevets**

(19)

(11) Numéro de publication : **0 371 830 B1**

(12) ## FASCICULE DE BREVET EUROPEEN

(45) Date de publication du fascicule du brevet :
02.12.92 Bulletin 92/49

(51) Int. Cl.⁵ : **B60T 13/567**

(21) Numéro de dépôt : **89402823.2**

(22) Date de dépôt : **13.10.89**

(54) **Dispositif de freinage pour véhicule automobile.**

(30) Priorité : **30.11.88 FR 8815679**

(43) Date de publication de la demande :
**06.06.90 Bulletin 90/23**

(45) Mention de la délivrance du brevet :
**02.12.92 Bulletin 92/49**

(84) Etats contractants désignés :
**DE ES FR GB IT**

(56) Documents cités :
**GB-A- 2 017 852**
**GB-A- 2 062 153**

(73) Titulaire : **BENDIX EUROPE Services Techniques S.A.**
**126 rue de Stalingrad**
**F-93700 Drancy (FR)**

(72) Inventeur : **Gautier, Jean-Pierre**
**Bendix France 126 Rue de Stalingrad**
**F-93700 Drancy (FR)**

EP 0 371 830 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un dispositif de freinage pour véhicule automobile comportant un maître-cylindre et un servofrein pneumatique. On sait que les véhicules automobiles comportent généralement un tablier séparant l'habitacle du compartiment moteur. Pour des raisons de compacité, la place disponible dans le compartiment moteur est de plus en plus réduite et un dispositif de freinage comportant un servofrein pneumatique et un maître-cylindre en ligne demande un espace non négligeable.

De ce fait, il a été proposé, notamment dans le document FR-A-2 421 775, de disposer le servofrein dans l'habitacle du véhicule. Selon l'enseignement de ce document, des pattes de tôle sont soudées à la périphérie du servofrein et sont fixées au tablier par vis et écrous.

Une telle solution, si elle permet de gagner un peu de place dans le compartiment moteur, n'est pas vraiment satisfaisante puisqu'elle rend plus délicate l'opération de montage du dispositif dans le véhicule.

En outre, elle ne permet pas de s'affranchir des efforts d'arrachement au niveau de la fixation du maître-cylindre au servofrein. En conséquence, la tôle de la partie avant du servofrein doit présenter une épaisseur notable et des renforts doivent être prévus à l'intérieur du servofrein de manière à éviter tout allongement du servofrein, ce qui va à l'encontre de la demande des constructeurs relativement à l'allègement des composants, et en augmente le coût.

La présente invention a pour but d'obvier à ces inconvénients.

L'invention concerne donc un dispositif de freinage pour véhicule automobile comportant un tablier séparant l'habitacle du compartiment moteur, ce dispositif comprenant un maître-cylindre comportant une bride par l'intermédiaire de laquelle il est fixé au moyen d'un ensemble vis-écrous à la paroi avant d'un servofrein pneumatique commandé par l'action d'un poussoir traversant la paroi arrière du servofrein, et un moyen de fixation du dispositif au tablier tel que le servofrein soit disposé côté habitacle.

Selon l'invention, le maître-cylindre est partiellement disposé dans l'habitacle et traverse une ouverture pratiquée à cet effet dans le tablier, le tablier étant en contact de la face de la bride opposée au servofrein et le moyen de fixation du dispositif étant constitué par l'ensemble vis-écrous de fixation du maître-cylindre à la paroi avant du servofrein .

De préférence, un évidement est formé sur la paroi avant du servofrein de façon à recevoir la bride du maître-cylindre.

De préférence également, le tablier est en contact de la face de la bride opposée au servofrein. Il est constitué par l'ensemble vis-écrous de fixation du maître-cylindre à la paroi avant du servofrein.

L'invention sera mieux comprise et d'autres buts, avantages et caractéristiques de celle-ci apparaîtront plus clairement à la lecture de la description qui suit de modes de réalisation préférés donnés à titre non limitatif et à laquelle est jointe une planche de dessins sur laquelle :

La Figure 1 représente schématiquement un premier mode de réalisation de l'invention ;

La Figure 2 représente schématiquement un deuxième mode de réalisation de l'invention et ;

La Figure 3 est une vue partielle en coupe agrandie d'un moyen préféré de fixation du dispositif au tablier.

L'Homme du métier aura compris que les termes "avant" et "arrière" utilisés ici font référence au sens du véhicule. Sur les Figures, l'avant est donc bien à droite, dirigé vers le compartiment moteur, tandis que l'arrière est à gauche, dirigé vers l'habitacle du véhicule. Par ailleurs, l'Homme du métier connaît le fonctionnement des servofreins pneumatiques ou à dépression ainsi que des maîtres-cylindres, et ce fonctionnement ne sera pas décrit ici.

En référence maintenant aux Figures, le tablier 1 sépare le compartiment moteur 3 et l'habitacle 5 du véhicule automobile. Le dispositif de freinage comprend un maître-cylindre 7 et un servofrein pneumatique 9 commandé par l'action d'un poussoir 11 généralement relié à la pédale de frein du véhicule. Le maître-cylindre 7 comporte une bride 13 permettant de le fixer au moyen de vis et d'écrous à la paroi avant du servofrein 9.

D'une manière générale, une partie arrière du maître-cylindre fait légèrement saillie à l'intérieur du servofrein 9 de manière à assurer un bon positionnement coaxial des composants de l'ensemble et déjà en réduire la longueur.

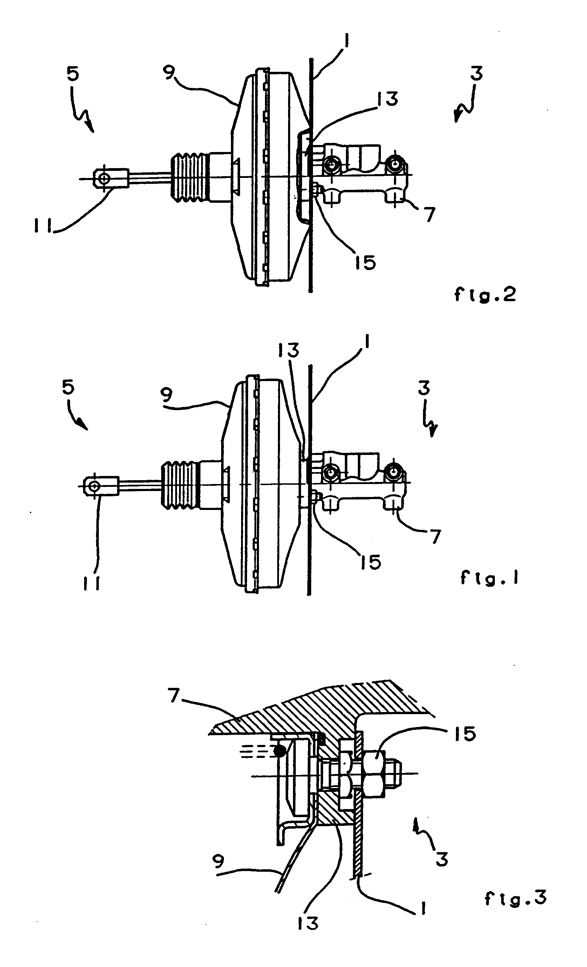

Selon le mode de réalisation représenté Figures 1 et 3, le moyen de fixation du dispositif sur le tablier est constitué par l'ensemble vis-écrous 15 de fixation du maître-cylindre à la paroi avant du servofrein 9, le tablier 1 étant prisonnier entre la face de la bride 13 opposée au servofrein et au moins un écrou prévu à cet effet.

Dès lors, le maître-cylindre 7 est partiellement disposé dans l'habitacle 5 et traverse une ouverture pratiquée à cet effet dans le tablier 1.

On atteint ainsi les buts principaux recherchés, à savoir la diminution de l'encombrement de la partie du dispositif située dans le compartiment moteur.

En outre, le servofrein 9 n'est plus soumis qu'à l'effort exercé sur le poussoir 11 par le conducteur du véhicule et ne tend plus à s'allonger puisque sa partie la plus soumise aux forces d'arrachement prend appui sur le tablier. Dès lors, il n'est plus nécessaire de prévoir des renforts à l'intérieur du servofrein qui peut ainsi être allégé considérablement et même être réalisé en plastique ou en tôle ultrafine. Enfin, le servofrein n'étant plus sujet à l'allongement, la course de la pédale d'actionnement diminue d'autant.

Pour diminuer l'encombrement de la partie du dispositif situé dans l'habitacle, on a prévu, Figure 2, de former un évidement sur la paroi avant du servomoteur, de façon à recevoir la bride 13 du maître-cylindre 7. En effet, l'Homme du métier sait que la course du piston disposé à l'intérieur du servofrein 9 est limitée par la présence d'un ressort de rappel reposant sur la face interne de la paroi du servofrein. Un tel évidement ménage à l'intérieur du servofrein une zone annulaire permettant au ressort de rappel de jouer convenablement son rôle à l'intérieur du servofrein, le piston intérieur du servofrein n'étant pas gêné dans sa course dans le cas où une force de freinage maximale serait appliquée par le conducteur au poussoir du servofrein.

Dans le cas où la forme du maître-cylindre ne permettrait pas à l'ouverture pratiquée dans le tablier pour le laisser passer d'être suffisamment petite pour que le dispositif soit fixé au tablier au moyen des vis-écrous fixant le maître-cylindre à la paroi avant du servofrein, selon une variante de l'invention, le moyen de fixation du dispositif peut être constitué par un autre ensemble vis-écrous disposé à une distance appropriée de l'axe du dispositif, à la périphérie de l'ouverture précitée pratiquée dans le tablier.

Dans le but de diminuer l'encombrement de la partie faisant saillie dans le compartiment moteur, on peut prévoir que le moyen de fixation comprend une entretoise permettant d'éloigner la paroi avant du servofrein du tablier ou encore de ménager une protubérance sur la paroi avant du servofrein. Dans ce cas, l'entretoise aura une longueur ou bien la protubérance une hauteur au moins égale à l'épaisseur de la bride 13.

En outre, le dispositif de freinage selon l'invention n'étant plus soumis à des forces d'arrachage en son point de fixation, le moyen de fixation du dispositif peut comprendre des organes de fixation complémentaires aptes à s'emboîter l'un dans l'autre de façon irréversible, tels qu'une tige supportée par le dispositif et un trou en vis à vis pratiqué dans le tablier, trou dont le bord est entaillé et replié partiellement en éloignement de la tige, cette tige pouvant être constituée par un prolongement de la vis de l'ensemble de fixation du maître-cylindre à la paroi avant du servofrein.

**Revendications**

1. Dispositif de freinage pour véhicule automobile comportant un tablier (1) séparant l'habitacle (5) du compartiment moteur (3), le dit dispositif comprenant un maître-cylindre (7) comportant une bride (13) par l'intermédiaire de laquelle il est fixé au moyen d'un ensemble vis-écrous (15) à la paroi avant d'un servofrein pneumatique (9) commandé par l'action d'un poussoir (11) traversant la paroi arrière du dit servofrein, et un moyen de fixation du dit dispositif au dit tablier tel que le dit servofrein (9) soit disposé côté habitacle (5), caractérisé en ce que le dit maître-cylindre (7) est partiellement disposé dans l'habitacle (5) et traverse une ouverture pratiquée à cet effet dans le dit tablier (1), le dit tablier (1) étant en contact de la face de la dite bride (13) opposée au dit servofrein (9) et le dit moyen de fixation du dispositif étant constitué par le dit ensemble vis-écrous de fixation du maître-cylindre (7) à la dite paroi avant du dit servofrein (9).

2. Dispositif selon la revendication 1, caractérisé en ce qu'un évidement est formé sur la paroi avant du dit servofrein (9) de façon à recevoir la dite bride (13) du dit maître-cylindre (7).

3. Dispositif selon la revendication 1, caractérisé en ce que le dit moyen de fixation comprend une entretoise d'une longueur au moins égale à l'épaisseur de la dite bride (13).

4. Dispositif selon la revendication 1, caractérisé en ce que le dit moyen de fixation est disposé sur une protubérance ménagée à cet effet sur la paroi avant du dit servofrein d'une hauteur au moins égale à l'épaisseur de la dite bride.

5. Dispositif selon l'une quelconque des revendications précédentes, caractérisé en ce que le dit moyen de fixation comprend des organes de fixation complémentaires aptes à s'emboîter l'un dans l'autre de façon irréversible.

6. Dispositif selon la revendication 5, caractérisé en ce que les dits organes de fixation comprennent au moins une tige supportée par le dit dispositif et un trou en vis-à-vis pratiqué dans le dit tablier, le bord de ce trou étant entaillé et replié partiellement en éloignement de la tige.

7. Dispositif selon la revendication 6, caractérisé en ce que la dite tige est constituée par une prolongement de la vis du dit ensemble vis-écrous de fixation du maître-cylindre à la dite paroi avant du dit servofrein.

**Patentansprüche**

1. Bremsvorrichtung für Kraftfahrzeuge mit einer Schürze (1), die das Karosseriegehäuse (5) von dem Motorraum (3) trennt, wobei die Vorrichtung einen Hauptzylinder (7) mit einem Flansch (13) aufweist, über den er mittels einer Schrauben-Muttern-Anordnung (15) an der Vorderwand eines pneumatischen Bremskraftverstärkers (9) befestigt ist, der durch die Wirkung eines Stößels (11) gesteuert wird, der sich durch die Hinterwand des Bremskraftverstärkers erstreckt, sowie mit einer Einrichtung zum Befestigen der Vorrichtung an der Schürze, so daß der Bremskraftverstärker (9) an der Seite des Karosseriegehäuses (5) angeordnet ist, dadurch gekennzeichnet, daß der Hauptzylinder (7) teilweise in dem Karosseriegehäuse (5) angeordnet ist und sich durch eine Öffnung erstreckt, die zu diesem Zweck in der Schürze (1) ausgebildet ist, wobei die Schürze (1) mit der Fläche des Flansches (13) in Kontakt steht, die dem Bremskraftverstärker (9) gegenüberliegt, und wobei die Einrichtung zum Befestigen der Vorrichtung durch die Schrauben-Muttern-Anordnung zum Befestigen des Hauptzylinders (7) an der Vorderwand des Bremskraftverstärkers (9) gebildet ist.

2.  Vorrichtung nach Anspruch 1, dadurch gekennzeichnet, daß an der Vorderwand des Bremskraftverstärkers (9) eine Ausnehmung ausgebildet ist, um den Flansch (13) des Hauptzylinders (7) aufzunehmen.

3.  Vorrichtung nach Anspruch 1, dadurch gekennzeichnet, daß die Befestigungseinrichtung einen Steg mit einer Länge aufweist, die wenigstens gleich der Dicke des Flansches (13) ist.

4.  Vorrichtung nach Anspruch 1, dadurch gekennzeichnet, daß die Befestigungseinrichtung an einem Vorsprung angeordnet ist, der zu diesem Zweck an der Vorderwand des Bremskraftverstärkers vorgesehen ist und eine Höhe aufweist, die wenigstens gleich der Dicke des Flansches ist.

5.  Vorrichtung nach einem der vorgehenden Ansprüche, dadurch gekennzeichnet, daß die Befestigungseinrichtung komplementäre Befestigungsmittel aufweist, die sich irreversibel ineinander einfügen lassen.

6.  Vorrichtung nach Anspruch 5, dadurch gekennzeichnet, daß die Befestigungsmittel wenigstens einen Stift aufweisen, der von der Vorrichtung gehalten wird, sowie ein gegenüberliegendes Loch, das zu diesem Zweck in der Schürze ausgebildet ist, wobei der Rand des Loches im Abstand von dem Stift geschlitzt und teilweise umgebogen ist.

7.  Vorrichtung nach Anspruch 6, dadurch gekennzeichnet, daß der Stift durch eine Verlängerung der Schraube der Schrauben-Muttern-Anordnung zum Befestigen des Hauptzylinders an der Vorderwand des Bremskraftverstärkers gebildet ist.

## Claims

1.  Braking device for a motor vehicle having a bulkhead (1) separating the passenger compartment (5) from the engine compartment (3), said device comprising a master cylinder (7) having a flange (13), via which it is fastened by means of a screw/nut assembly (15) to the front wall of a pneumatic brake booster (9) controlled as a result of the action of a tappet (11) passing through the rear wall of said brake booster, and a means for fastening said device to said bulkhead such that said brake booster (9) is arranged on the same side as the passenger compartment (5), characterized in that said master cylinder (7) is partially arranged in the passenger compartment (5) and passes through an orifice made in said bulkhead (1) for this purpose, said bulkhead (1) being in contact with the face of said flange (13) opposite said brake booster (9), and said fastening means of the device consisting of said screw/nut assembly for fastening the master cylinder (7) to said front wall of said brake booster (9).

2.  Device according to Claim 1, characterized in that a recess is formed in the front wall of said brake booster (9), so as to receive said flange (13) of said master cylinder (7).

3.  Device according to Claim 1, characterized in that said fastening means comprises a spacer of a length at least equal to the thickness of said flange (13).

4.  Device according to Claim 1, characterized in that said fastening means is arranged on a protuberance formed for this purpose on the front wall of said brake booster and of a height at least equal to the thickness of said flange.

5.  Device according to any one of the preceding Claims, characterized in that said fastening means comprises matching fastening members capable of fitting into one another irreversibly.

6.  Device according to Claim 5, characterized in that said fastening members comprise at least one rod supported by said device and an opposite hole made in said bulkhead, the edge of this hole being notched and bent partially away from the rod.

7.  Device according to Claim 6, characterized in that said rod is formed by an extension of the screw of said screw/nut assembly for fastening the master cylinder to said front wall of said brake booster.

fig.2

fig.1

fig.3